# EUROPEAN PATENT APPLICATION

(11) **EP 4 068 771 A1**
(43) Date of publication of application: **05.10.2022**
(21) Application number: 20896528.5
(22) Date of filing: 02.12.2020
(51) Int. Cl.: H04N 13/302, H04N 13/305, H04N 13/366

(54) **MULTI-VIEW 3D DISPLAY SCREEN AND MULTI-VIEW 3D DISPLAY DEVICE**

(30) Priority: 05.12.2019 CN 201911231386
(71) Applicant: Beijing Ivisual 3D Technology Co., Ltd., Beijing 100055 (CN); Visiotech Ventures Pte. Ltd., Singapore 188979 (SG)
(72) Inventor: DIAO, Honghao, Beijing 100055 (CN); HUANG, Lingxi, Singapore 188979 (SG)
(74) Representative: Manitz Finsterwald Patent- und Rechtsanwaltspartnerschaft mbB
(86) International application number: PCT/CN2020/133330
(87) International publication number: WO 2021/110036

(57) **Abstract**

The present application relates to the technical field of 3D display, and discloses a multi-viewpoint 3D display screen, comprising: a display panel, having a plurality of composite pixels, wherein each composite pixel in the plurality of composite pixels comprises a plurality of composite subpixels, and each composite subpixel in the plurality of composite subpixels comprises a plurality of subpixels arranged in array; and a plurality of spherical gratings, covering the plurality of composite subpixels. The multi-viewpoint 3D display screen can play a 3D effect for users at different viewing distances, and achieves high-quality 3D quality. The present application further discloses a multi-viewpoint 3D display device.

## Description

The present application claims priority to the Chinese Patent Application with an application number of 2019112313866 and a title of "Multi-viewpoint Naked Eye 3D Display Screen and Multi-viewpoint Naked Eye 3D Display Device", filed to China National Intellectual Property Administration on December 5th, 2019, the disclosures of which are hereby incorporated by reference.

### Technical Field

The present application relates to the technical field of 3D display, and for example, relates to a multi-viewpoint 3D display screen and a multi-viewpoint 3D display device.

### Background

At present, a 3D display device refracts light emitted by pixels through a lenticular grating to achieve a 3D display effect.

In a process of realizing embodiments of the present disclosure, at least the following problems exist in related technologies: the lenticular grating with fixed optical properties are matched with the pixels to form a plurality of views that are horizontally arranged along the display device, and for a plurality of users at different viewing distances, partial users may view poor 3D effects, or cannot view the 3D effects.

### Summary

In order to provide a basic understanding of some aspects of the disclosed embodiments, a brief summary is given below. The summary is not intended to be a general comment, nor to identify key/important components or describe the scope of protection of the embodiments, but to be a preface to the following detailed description.

Embodiments of the present disclosure provide a multi-viewpoint 3D display screen and a multi-viewpoint 3D display device, for solving a problem that users at different viewing distances cannot simultaneously view a 3D effect.

In some embodiments of the present disclosure, a multi-viewpoint 3D display screen is provided, comprising: a display panel, having a plurality of composite pixels, wherein each composite pixel in the plurality of composite pixels comprises a plurality of composite subpixels, and each composite subpixel in the plurality of composite subpixels comprises a plurality of subpixels arranged in array; and a plurality of spherical gratings, covering the plurality of composite subpixels.

In some embodiments, each composite subpixel is in a shape of square.

In some embodiments, each subpixel in the plurality of subpixels is in a shape of square.

In some embodiments, the plurality of subpixels are arranged in an i×j array, wherein j ≥2; and i ≥2.

In some embodiments, an aspect ratio of each subpixel in the plurality of subpixels is i/j.

In some embodiments, i ≥3; and j ≥3.

In some embodiments, the plurality of composite subpixels have different colors, and the plurality of composite subpixels having different colors are alternately arranged.

In some embodiments, the plurality of composite subpixels having different colors are arranged in a triangular shape.

In some embodiments, at least one spherical grating in the plurality of spherical gratings is a round spherical grating or an elliptical spherical grating.

In some embodiments, at least one spherical grating in the plurality of spherical gratings further comprises at least one side surface.

In some embodiments of the present disclosure, a multi-viewpoint 3D display device is provided, comprising: the above multi-viewpoint 3D display screen; and a 3D processing apparatus, configured to render subpixels in the plurality of composite subpixels in the multi-viewpoint 3D display screen.

In some embodiments, each composite subpixel comprises a plurality of subpixels arranged in an i×j array, wherein the plurality of subpixels in the i×j array correspond to i first direction viewpoints and j second direction viewpoints of the multi-viewpoint 3D display device.

In some embodiments, the multi-viewpoint 3D display device further comprises: an eye positioning data acquisition device, configured to acquire eye positioning data.

In some embodiments, the eye positioning data acquisition device is configured to acquire transverse positions of eyes of a user to determine a first direction viewpoint where the eyes of a user locate.

In some embodiments, the 3D processing apparatus is configured to render subpixels, corresponding to the first direction viewpoints, in the plurality of subpixels in array based on the first direction viewpoint where the eyes of the user locate.

In some embodiments, the eye positioning data acquisition device is configured to acquire at least one of depth positions and height positions of the eyes of a user to determine second direction viewpoint where eyes of the user locate.

In some embodiments, the 3D processing apparatus is configured to render subpixels, corresponding to the second direction viewpoints, in the plurality of subpixels in array based on the second direction viewpoint where eyes of the user locate.

The multi-viewpoint 3D display screen and the multi-viewpoint 3D display device provided by the embodiments of the present disclosure may achieve technical effects as follows:
The pixels covered by the spherical gratings respectively play 3D images for spatial positions, corresponding to a plurality of views, at different distances away from the multi-viewpoint 3D display screen, thereby meeting respective 3D viewing needs of users at different viewing distances and realizing high-quality 3D display.

The above general descriptions and the following descriptions are exemplary and explanatory only, and are not used to limit the present application.

### Description of Drawings

One or more embodiments are illustrated by the corresponding drawings, and the illustrations and drawings do not limit the embodiments. Elements having the same reference numerals in the drawings are shown as similar elements, and the drawings are not intended to limit the scale, wherein:
Fig. 1 is a schematic diagram of a multi-viewpoint 3D display screen according to embodiments of the present disclosure;
Fig. 2 is a schematic diagram of arrangement of composite pixels according to embodiments of the present disclosure;
Fig. 3 is a spherical grating and a corresponding composite subpixel according to one embodiment of the present disclosure;
Fig. 4 is a spherical grating and a corresponding composite subpixel according to another embodiment of the present disclosure;
Figs. 5A-5C are structural schematic diagrams of a multi-viewpoint 3D display device according to embodiments of the present disclosure;
Fig. 6 is a schematic diagram of dynamic rendering according to embodiments of the present disclosure; and
Figs. 7A-7E are formats of images comprised in video frames of 3D video signals according to embodiments of the present disclosure.

### Reference numerals:

100: multi-viewpoint 3D display device; 110: multi-viewpoint 3D display screen; 111: display panel; 120: processor; 121: register; 130: 3D processing apparatus; 131: cache; 140: video signal interface; 150: eye positioning device; 160: eye positioning data interface; 190: spherical grating; 191: side section; 192: round spherical surface; 193: bottom plane; 400: composite pixel; 410: red composite subpixel; 420: green composite subpixel; 430: blue composite subpixel; 601: one of two images comprised in a video frame of a 3D video signal; 602: one of two images comprised in a video frame of a 3D video signal; 603: composite image.

### Detailed Description

For more detailed understanding of characteristics and technical contents of embodiments of the present disclosure, the implementation of the embodiments of the present disclosure will be described in detail below with reference to the accompanying drawings, and the accompanying drawings are used for reference only, instead of limiting the embodiments of the present disclosure.

A multi-viewpoint 3D display screen (such as: a multi-viewpoint naked eye 3D display screen) is provided according to embodiments of the present disclosure, and may be applied to a multi-viewpoint 3D display device. The multi-viewpoint 3D display screen comprises a display panel and a plurality of spherical gratings. The display panel has a plurality of composite pixels, each composite pixel comprises a plurality of composite subpixels, and each composite subpixel is composed of subpixels in an i×j array, wherein i ≥2, and j ≥2. The plurality of spherical gratings cover the plurality of composite subpixels. In the subpixels of the i×j array, i corresponds to a first direction view (such as a row view, also called a horizontal view) of the multi-viewpoint 3D display device, and j corresponds to a second direction view (such as a column view, also called a height or depth view) of the multi-viewpoint 3D display device. In some embodiments, the subpixels in the i×j array in each composite subpixel are homochromatic subpixels in the i×j array.

In some embodiments, the spherical gratings and the composite subpixel in the multi-viewpoint 3D display screen are of a one-to-one corresponding relation.

In some embodiments, i ≥3, and j ≥3.

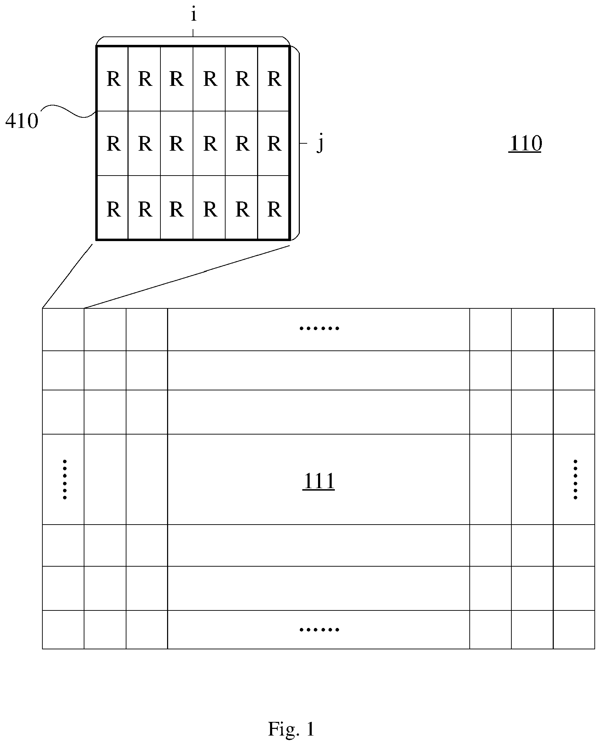

Figs. 1-3 show a multi-viewpoint 3D display screen 110 in the embodiments of the present disclosure. The multi-viewpoint 3D display screen 110 comprises a display panel 111 and a plurality of spherical gratings 190 that cover the display panel 111. The display panel 111 has a plurality of composite pixels 400, and each composite pixel 400 comprises a plurality of composite subpixels. In the shown embodiments, each composite pixel 400 comprises three composite subpixels of different colors, i.e., respectively a red composite subpixel 410, a green composite subpixel 420 and a blue composite subpixel 430. The red composite subpixel 410 is composed of i-column j-row (i×j array) red subpixels R, the green composite subpixel 420 is composed of i-column j-row (i×j array) green subpixels G, and the blue composite subpixel 430 is composed of i-column j-row (i×j array) blue subpixels B. Fig. 1 shows the red composite subpixel 410 composed in the i×j array of red subpixels R to serve as an example.

In some embodiments, each composite subpixel is in a shape of square. In the homochromatic subpixels of the i×j array in each composite subpixel, an aspect ratio of each subpixel is equal to i/j. In some embodiments, each subpixel in each composite subpixel is in a shape of square.

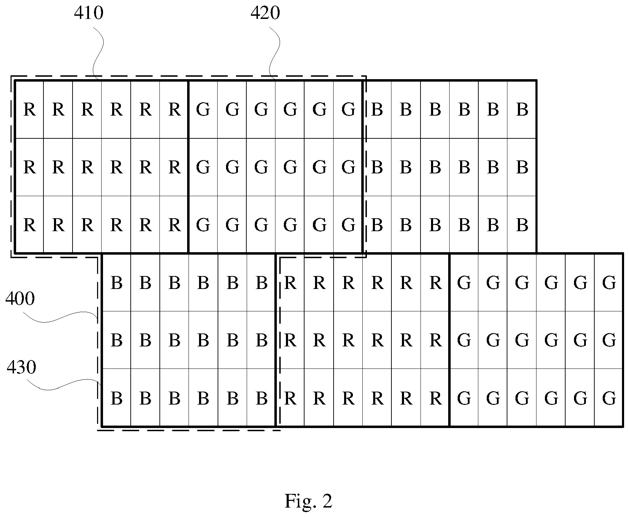

As shown in Figs. 1 and 2, in the i×j array of red subpixels R in the red composite subpixel 410, i is equal to 6 and j is equal to 3. Inthe i×j array of green subpixels G in the green composite subpixel 420, i is equal to 6 and j is equal to 3. In the i×j array of blue subpixels B in the blue composite subpixel 430, i is equal to 6 and j is equal to 3. In the composite subpixels of each color, homochromatic subpixels of a 6×3 array correspond to 6 row views and 3 column views of the multi-viewpoint 3D display device.

It may be contemplated that in other embodiments, the composite subpixels and the subpixels may have other configurations. For example, each subpixel in the homochromatic subpixels of the i×j array is in a shape of square, and an aspect ratio i/j of each subpixel is equal to 1.

In some embodiments, the composite subpixels of different colors are alternately arranged in the display panel, and the plurality of composite subpixels of each composite pixel are arranged in a triangular shape.

As shown in Fig. 2, the red composite subpixels 410, the green composite subpixels 420 and the blue composite subpixels 430 in the composite pixels 400 are arranged in a triangular shape. The red composite subpixels 410, the green composite subpixels 420 and the blue composite subpixels 430 are alternately arranged in a horizontal direction of the display panel 111. The composite pixels 400 are alternately arranged.

In some embodiments, the display panel 111 of the multi-viewpoint 3D display device 110 may comprise m-column n-row (i.e., m×n array) composite pixels and thus define m×n display resolution. In some embodiments, the m×n display resolution may be resolution of full high definition (FHD) or higher, and comprises but not limited to: 1920×1080, 1920×1200, 2048×1280, 2560×1440,3840×2160 and the like.

In the embodiments of the present disclosure, each composite subpixel has corresponding subpixels corresponding to views. The plurality of subpixels of each composite subpixel are arranged on the multi-viewpoint 3D display screen in array, and the plurality of subpixels in array form have the same color. Since a plurality of views of the 3D display device are roughly arranged along the horizontal and vertical directions of the multi-viewpoint 3D display screen, different subpixels, corresponding to corresponding views, in each composite subpixel need to be correspondingly dynamically rendered when the eyes are located at views of different azimuths due to back-and-forth and side-to-side movement of the user. Since the homochromatic subpixels in each composite subpixel are arranged in array, cross chrominance brought by persistence of vision can be avoided. In addition, due to refraction of the gratings, one part of currently displayed subpixels may be seen at adjacent view positions, while through homochromatic arrangement in the same row, even if one part of the currently displayed subpixels are seen, a color mixture problem will not occur.

In some embodiments, the plurality of spherical gratings are arranged on the surface of the display panel and respectively cover one composite subpixel. Each spherical grating in the plurality of spherical gratings may, for example, comprise a round spherical surface to form a round spherical grating. In some other embodiments, each spherical grating in the plurality of spherical gratings comprises an elliptical spherical surface to form an elliptical spherical grating. In some other embodiments, the spherical gratings comprise round spherical surfaces and side sections. In some other embodiments, the spherical gratings comprise elliptical spherical surfaces and side sections.

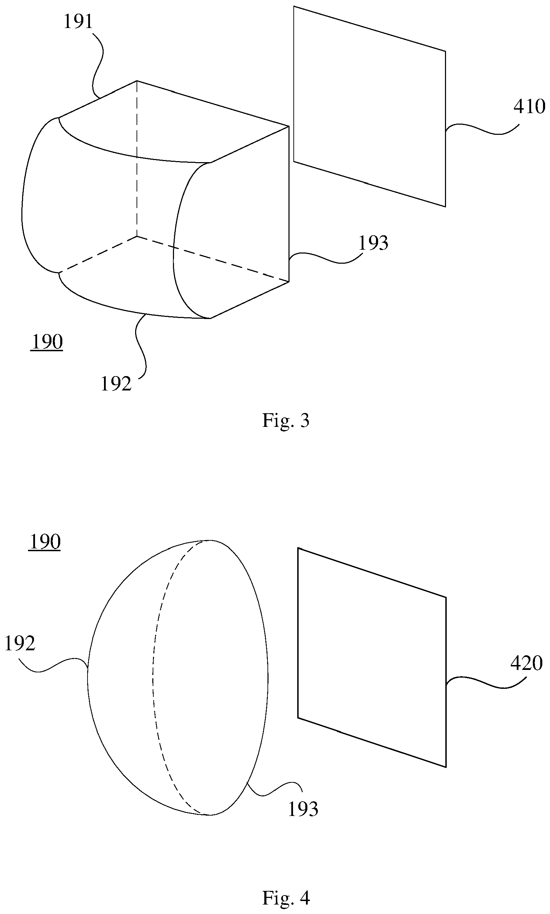

Fig. 3 shows one example of the spherical gratings. As shown in Fig. 3, one spherical grating 190 corresponds to one composite subpixel, such as the red composite subpixel 410. The spherical grating 190 comprises, for example, a square bottom plane 193 and a round spherical surface 192 opposite to the bottom plane 193, and a side section 191 connected between the round spherical surface 192 and the bottom plane 193.

Fig. 4 shows another example of the spherical gratings. As shown in Fig. 4, one spherical grating 190 corresponds to one composite subpixel, such as the green composite subpixel 420. The spherical grating 190 comprises, for example, a round bottom plane 193 and a round spherical surface 192 connected with the bottom plane 193.

In other embodiments, the bottom planes of the spherical gratings may be of other shapes, such as hexagon, triangle, etc.

In some embodiments, another refracting layer having a different refractive index from the spherical grating is arranged on the spherical surface side of the spherical grating; a surface, facing the spherical grating, of the another refracting layer is a concave surface and is attached to the spherical surface of the spherical grating in a concave-convex fit manner; and a surface back to the spherical grating is a plane, such as a plane parallel to the bottom plane of the spherical grating.

The multi-viewpoint 3D display screen 110 according to the embodiments of the present disclosure may be applied to the multi-viewpoint 3D display device. According to the embodiments of the present disclosure, the multi-viewpoint 3D display device comprises the multi-viewpoint 3D display screen, a video signal interface and a 3D processing apparatus. The video signal interface is configured to receive a video frame of a 3D video signal. The 3D processing apparatus is configured to render related subpixels in each composite subpixel according to the received video frame of the 3D video signal.

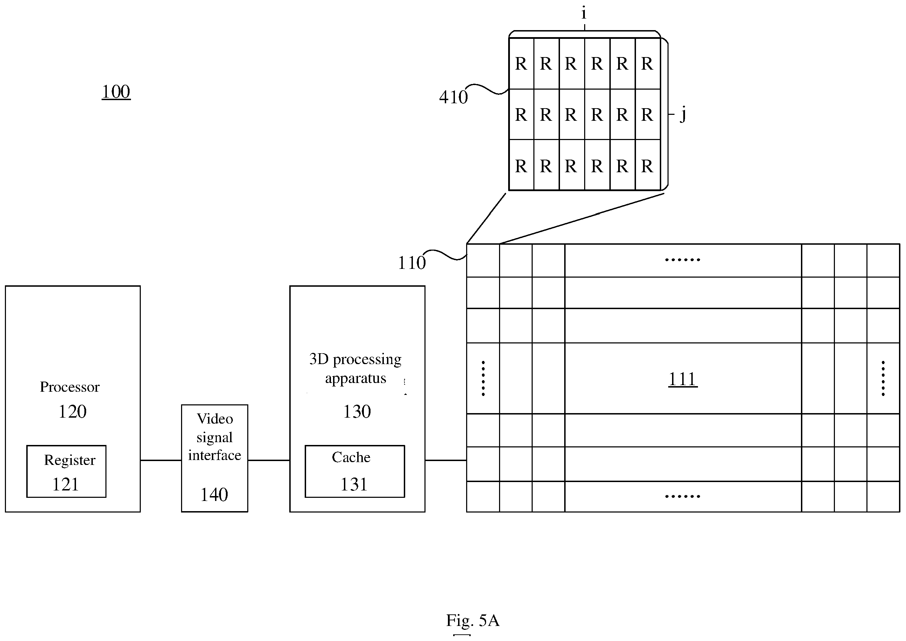

Fig. 5A shows the multi-viewpoint 3D display device 100 in the embodiments of the present disclosure. As shown in Fig. 5A, the multi-viewpoint 3D display device 100 comprises the multi-viewpoint 3D display screen 110, a 3D processing apparatus 130 and a 3D signal interface (such as a video signal interface 140) configured to receive 3D contents such as the 3D video signal.

In some embodiments, the 3D video signal comprises the video frame.

In some embodiments, the 3D processing apparatus is an FPGAor ASIC or an FPGA or ASIC chipset. In some embodiments, the multi-viewpoint 3D display device 100 may also be provided with more than one 3D processing apparatus 130, which processes rendering of subpixels of each composite subpixel in each composite pixel of the multi-viewpoint 3D display screen 110 in parallel or in series or in series/parallel combination. Those skilled in the art will understand that, the more than one 3D processing apparatus may be allocated in other manners and may process multi-row multi-column composite pixels or composite subpixels of the multi-viewpoint 3D display screen 110 in parallel, which falls within the scope of the embodiments in the present disclosure. In some embodiments, the 3D processing apparatus 130 may further optionally comprise a cache 131, for caching the received video frame.

In some embodiments, the 3D processing apparatus is in communication connection with the multi-viewpoint 3D display screen. In some embodiments, the 3D processing apparatus is in communication connection with a drive device of the multi-viewpoint 3D display screen.

Referring to Fig. 5A, the multi-viewpoint 3D display device 100 may further comprise a processor 120 in communication connection with the 3D processing apparatus 130 through the video signal interface 140. In some embodiments, the processor is comprised in a computer or an intelligent terminal. The intelligent terminal is, for example, a mobile terminal. Or, the processor may serve as a processor unit of the computer or the intelligent terminal. However, it may be contemplated that, in some embodiments, the processor 120 may be arranged outside the multi-viewpoint 3D display device 100, and for example, the multi-viewpoint 3D display device 100 may be a multi-viewpoint 3D display with the 3D processing apparatus, such as a non-intelligent 3D TV.

In some embodiments, the processor is comprised inside the multi-viewpoint 3D display device. Based on this, the 3D signal interface 140 is an internal interface connecting the processor 120 and the 3D processing apparatus 130. The 3D display device 100 may be, for example, a mobile terminal, and the 3D signal interface 140 may be an MIPI, a mini-MIPI, an LVDS interface, a min-LVDS interface or a Display Port.

In some embodiments, as shown in Fig. 5A, the processor 120 of the multi-viewpoint 3D display device 100 may further comprise a register 121. The register 121 may be configured to temporarily store instructions, data and addresses. In some embodiments, the register 121 may be configured to receive information related to display requirements of the multi-viewpoint 3D display screen 110. In some embodiments, the multi-viewpoint 3D display device 100 may further comprise a coder/decoder, configured to decompress and code/decode a compressed 3D video signal and transmit the decompressed 3D video signal to the 3D processing apparatus 130 through the 3D signal interface 140.

In some embodiments, homochromatic subpixels of the i×j array in each composite subpixel of the multi-viewpoint 3D display screen 110 correspond to i first direction viewpoints and j second direction viewpoints of the multi-viewpoint 3D display device. The first direction viewpoints may be row views or called horizontal views, and correspond to view positions of the user in a horizontal direction (X-axis direction) of the multi-viewpoint 3D display screen. The second direction viewpoints may be column views or called depth or height views, and correspond to view positions of the user in a vertical direction (Y-axis direction) and/or a depth direction (Z-axis direction) of the multi-viewpoint 3D display screen. In the embodiments of the present disclosure, the depth is defined by a distance of the user relative to the multi-viewpoint 3D display screen.

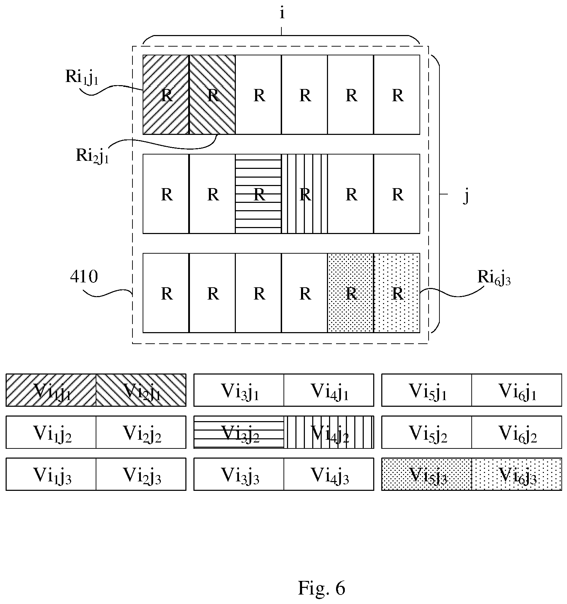

As shown in Fig. 6, a corresponding relation between the red composite subpixels 410 composed of red subpixels R in the i×j array and the i first direction viewpoints and j second direction viewpoints of the multi-viewpoint 3D display device is shown. For clarity, each view is identified by coordinates of a subpixel that corresponds to each view. The coordinate of each red subpixel R is identified based on a position Riijj of the subpixel in the i×j red subpixel array of the red composite subpixels. As shown in Fig. 6, in the i×j red subpixel array, the coordinate of the first red subpixel R from the left of the first row is Rilj 1, the coordinate of the second red subpixel R from the left of the first row is Ri2j 1, and by parity of reasoning, the coordinate of the sixth red subpixel R from the left of the third row is Ri6j3. Correspondingly, a view that corresponds to the first red subpixel Ri1j1 from the left of the first row in the i×j red subpixel array is Vi1j1, a view that corresponds to the second red subpixel Ri2j1 from the left of the first row is Vi2j 1, and by parity of reasoning, a view that corresponds to the sixth red subpixel Ri6j3 from the left of the third row is Vi6j3. Corresponding relations between the composite subpixels of other colors and the views may be analogized by referring to the corresponding relation between the red composite subpixels and the views.

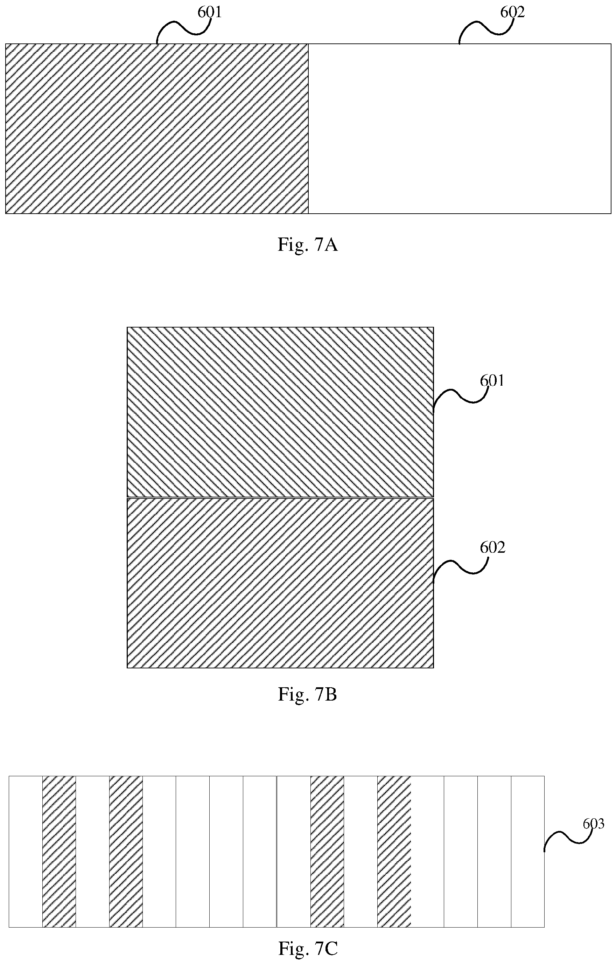

Transmission and display of a 3D video signal inside the multi-viewpoint 3D display device in the embodiments of the present disclosure will be described below by referring to Figs. 7A-7E. In the shown embodiments, the multi-viewpoint 3D display device may define a plurality of views, such as the i first direction viewpoints and the j second direction viewpoints. Eyes of the user may view display of corresponding subpixels in the composite subpixel of each composite pixel in the display panel at each view (spatial position). Two different pictures viewed by both eyes of the user at different views form a parallax, thereby compositing a 3D image in the brain.

In some embodiments of the present disclosure, the 3D processing apparatus 130 receives, for example, video frames of decomposed 3D video signals from the processor 120 through, for example, the video signal interface 140 as the internal interface. Each video frame may comprise two images or comprise a composite image or may be composed of the images.

In some embodiments, the two images or the composite image may comprise images of different types and may be arranged in various forms.

In the embodiment shown as Fig. 7A, the video frame of the 3D video signal comprises two images 601 and 602 in parallel or is composed of the images. In some embodiments, the two images may be respectively a left-eye parallax image and a right-eye parallax image. In some embodiments, the two images may be respectively a color rendering image and a depth-of-field (DOF) image.

In the embodiment shown as Fig. 7B, the video frame of the 3D video signal comprises two images 601 and 602 in a top-bottom format or is composed of the images. In some embodiments, the two images may be respectively a left-eye parallax image and a right-eye parallax image. In some embodiments, the two images may be respectively a color rendering image and a DOF image.

In the embodiment shown as Fig. 7C, the video frame of the 3D video signal comprises a composite image 603 in a left-right interleaved format. In some embodiments, the composite image may be a left-right interleaved left-eye and right-eye parallax composite image. In some embodiments, the composite image may be a left-right interleaved color rendering image and a DOF image.

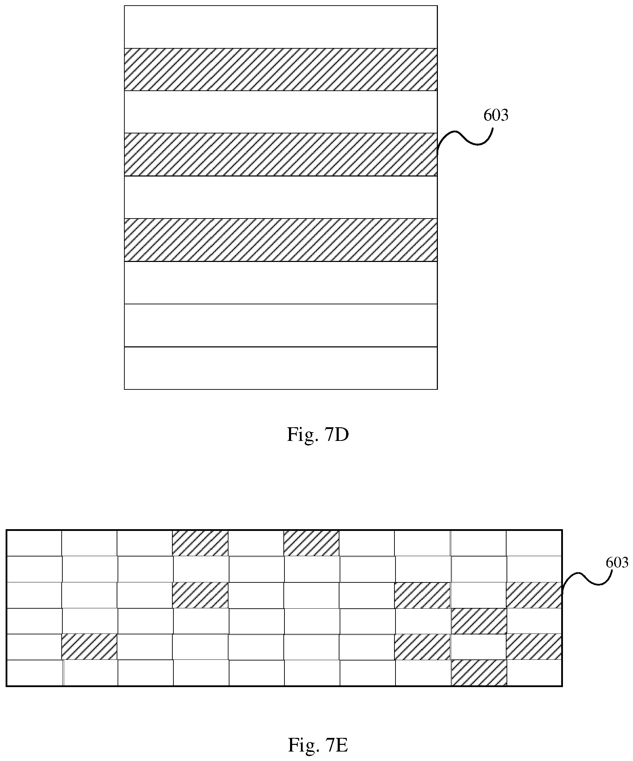

In the embodiment shown as Fig. 7D, the video frame of the 3D video signal comprises a composite image 603 in a top-bottom interleaved format. In some embodiments, the composite image may be a top-bottom interleaved left-eye and right-eye parallax composite image. In some embodiments, the composite image may be a top-bottom interleaved color rendering and a DOF image.

In the embodiment shown as Fig. 7E, the video frame of the 3D video signal comprises a composite image 603 interleaved in a checker board format. In some embodiments, the composite image may be a left-eye and right-eye parallax composite image interleaved in the checkerboard format. In some embodiments, the composite image may be a color rendering image and a DOF image interleaved in the checkerboard format.

Those skilled in the art will understand that, the embodiments shown in the drawings are merely illustrative. The two images or the composite image comprised in the video frame of the 3D video signal may comprise images of other types and may be arranged in other forms, which falls within the scope of the embodiments of the present disclosure.

In some embodiments, after receiving the video frame comprising the two images 601 and 602, the at least one 3D processing apparatus 130 renders at least one subpixel in each composite subpixel based on one of the two images and renders at least another subpixel in each composite subpixel based on the other image of the two images.

In some embodiments, after receiving the video frame comprising the composite image, the at least one 3D processing apparatus 130 renders at least two subpixels in each composite subpixel based on the composite image. For example, at least one subpixel is rendered according to a first image (partial) in the composite image, and at least another subpixel is rendered according to a second image (partial).

In some embodiments, this is, for example, dynamic rendering performed based on real-time eye positioning data.

In some embodiments, the multi-viewpoint 3D display device further comprises an eye positioning data acquisition device, such as an eye positioning device or an eye positioning data interface, configured to acquire eye positioning data. In some embodiments, the eye positioning data comprise spatial position information of eyes of a user, such as a distance of the eyes or face of the user relative to the multi-viewpoint 3D display screen or the eye positioning device (also called a depth of the eyes or face of the user), a position of the eyes or face of the user in a vertical direction of the multi-viewpoint 3D display screen, a position of the eyes or face of the user in a horizontal direction of the multi-viewpoint 3D display screen, a view position of the eyes of a user, a user view angle, etc.

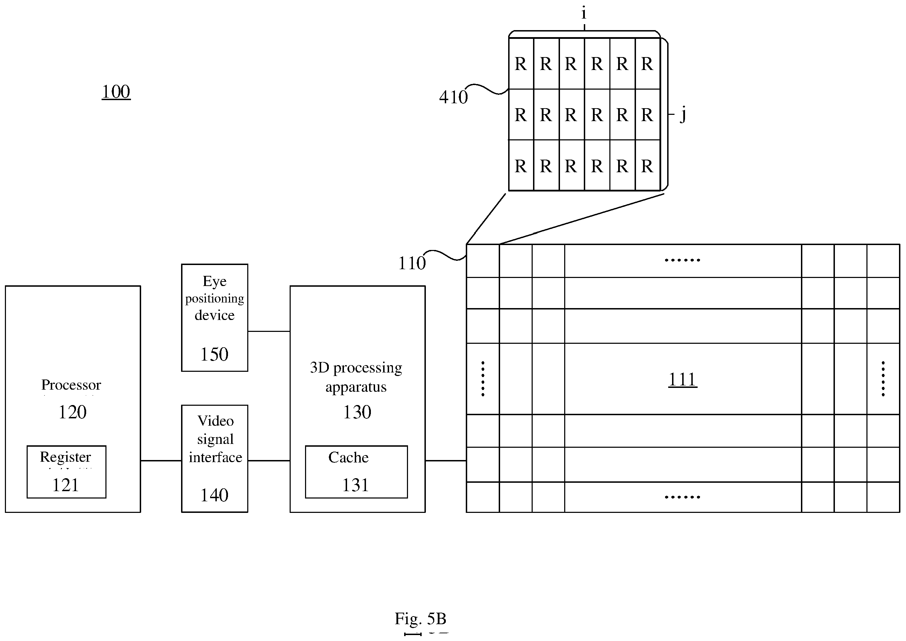

In the embodiment shown as Fig. 5B, the multi-viewpoint 3D display device 100 comprises an eye positioning device 150 in communication connection with the 3D processing apparatus 130, and thus the 3D processing apparatus 130 may directly receive the eye positioning data.

In some embodiments, the eye positioning device comprises an eye positioning unit configured to shoot a user image (such as a user face image), an eye positioning image signal processor configured to determine an eye space position based on the shot user image, and an eye positioning data interface configured to transmit eye space position information of the eye space position.

In some embodiments, the eye positioning unit comprises a first camera configured to shoot a first image and a second camera configured to shoot a second image, while the eye positioning image signal processor is configured to identify existence of the eyes based on at least one image in the first image and the second image and to determine an eye view position based on a space position of the eyes in the first image and the second image.

In some embodiments, the eye positioning unit comprises at least one camera configured to shoot at least one image and at least one depth acquisition device configured to at least acquire depth information of the eyes of a user, while the eye positioning image signal processor is configured to identify existence of the eyes based on the shot at least one image and to determine a view position of the eyes based on positions of the eyes in the at least one image and the depth information of the eyes of a user.

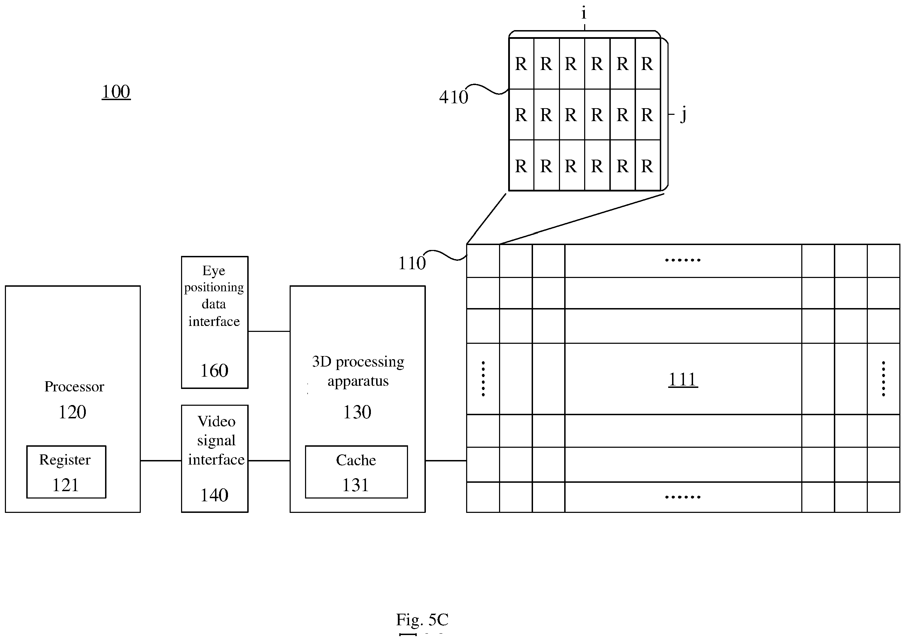

In the embodiment shown as Fig. 5C, the eye positioning device (not shown) may be directly connected with the processor 120, while the 3D processing apparatus 130 acquires the eye positioning data from the processor 120 through an eye positioning data interface 160. In some other embodiments, the eye positioning device may be simultaneously connected with the processor and the 3D processing apparatus. Thus, on the one hand, the 3D processing apparatus 130 may directly acquire the eye positioning data from the eye positioning device; and on the other hand, other information acquired by the eye positioning device may be processed by the processor.

In some embodiments, the eye positioning device acquires a transverse position of the eyes of a user in real time to determine the first direction viewpoint where eyes of a user locate. The 3D processing apparatus renders subpixels, corresponding to the first direction viewpoints, in the homochromatic subpixels of i×j array in each composite subpixel based on the first direction viewpoint where eyes of the user locate.

In some embodiments, the eye positioning device acquires a depth position of the eyes of a user in real time to determine the second direction viewpoint where eyes of the user locate. Or, the eye positioning device acquires a height position of the eyes of a user in real time to determine the second direction viewpoint where eyes of the user locate. Or, the eye positioning device acquires a height position and a depth position of the eyes of a user in real time to determine the second direction viewpoint where eyes of the user locate. The 3D processing apparatus renders subpixels, corresponding to the second direction viewpoints, in homochromatic subpixels of i×j array in each composite subpixel based on the second direction viewpoint where eyes of the user locate.

Referring to Fig. 6, one example of dynamically rendering corresponding subpixels in the composite subpixels based on real-time eye positioning data in the multi-viewpoint 3D display device is shown. Fig. 6 shows red composite subpixels 410 composed of red subpixels R in an i×j array, wherein i is equal to 6, and corresponds to 6 row direction viewpoints of the multi-viewpoint 3D display device, and j is equal to 3, and corresponds to 3 column direction viewpoints of the multi-viewpoint 3D display device. The real-time eye positioning data may be, for example, acquired by the eye positioning device in real time. When the eye positioning device acquires that both eyes of one user are located at views Vi1j1 and Vi2j1, images of views at both eyes of the user are generated based on the video frame of the 3D video signal, and two red subpixels Ri1j1 and Ri2j1, corresponding to the views Vi1j1 and Vi2j1, in the red subpixels R of the i×j array in the red composite subpixels 410 are rendered. When the eye positioning device acquires that both eyes of another user are located at views Vi3j2 and Vi4j2, images of views at both eyes of the user are generated based on the video frame of the 3D video signal, and two red subpixels Ri3j2 and Ri4j2, corresponding to the views Vi3j2 and Vi4j2, in the red subpixels R of the i×j array in the red composite subpixels 410 are rendered. When the eye positioning device acquires that both eyes of another one user are located at views Vi5j3 and Vi6j3, images of views at both eyes of the user are generated based on the video frame of the 3D video signal, and two red subpixels Ri5j3 and Ri6j3, corresponding to the views Vi5j3 and Vi6j3, in the red subpixels R of the i×j array in the red composite subpixels 410 are rendered. Therefore, users located at different row positions (transverse positions) and column positions (comprising depth positions and height positions) in front of the display panel may see appropriate 3D images.

The multi-viewpoint 3D display device according to the embodiments of the present disclosure may be applied to video playback devices, and for example, may be presented as a mobile terminal (e.g., a mobile phone or a tablet personal computer), a TV, a mobile TV, a computer, a cinema viewing system or a family viewing system.

The above description and drawings sufficiently illustrate the embodiments of the present disclosure to enable those skilled in the art to practice them. Other embodiments may comprise structural, logical, electrical, process, and other changes. Unless expressly required, individual components and functions are optional and the order of operations may be changed. Parts and features of some embodiments may be included in or substituted for parts and features of other embodiments. The scope of the embodiments of the present disclosure includes the full scope of the claims, and all available equivalents of the claims. The terms used in the present application are used to describe the embodiments only and not to limit the claims. When used in the present application, the term "comprise", etc. refer to the presence of at least one of stated features, but does not preclude the presence of other features.

Those skilled in the art may recognize that the units and algorithm steps of each example described in conjunction with the embodiments disclosed herein can be implemented in electronic hardware, or a combination of computer software and electronic hardware. Those skilled in the art may use different methods for implementing the described functions for each particular application, but such implementations should not be considered beyond the scope of the embodiments of the present disclosure.

In the embodiments disclosed herein, the disclosed method and product(including, but not limited to the apparatus and the device) may be realized in other ways. For example, the device embodiments described above are merely schematic. For example, the division of the units may be only a logical functional division, and may be an additional division manner in actual realization. For example, multiple units or components may be combined or integrated into another system, or some features may be ignored or not executed. In addition, the displayed or discussed mutual coupling or direct coupling or communication connection may be indirect coupling or communication connection through some interfaces, devices or units, and may be electrical, mechanical or other forms. The units described as separate components may or may not be physically separated, and the components shown as the units may or may not be physical units. The present embodiments may be implemented by selecting some or all of the units according to actual needs. In addition, each functional unit in the embodiments of the present disclosure may be integrated into one processing unit, or each unit may exist physically alone, or two or more units may be integrated into one unit.

The flowcharts and block diagrams in the drawings show architectures, functions and operations possibly implemented by systems, methods and computer program products according to the embodiments of the present disclosure. In this regard, each block in the flowcharts or block diagrams may represent a part of a module, program segment or code, and part of the module, program segment or code contains one or more executable instructions for implementing specified logical functions. In some alternative implementations, the functions marked in the blocks may also occur in an order different from the order marked in the drawings. For example, two continuous blocks may actually be executed substantially concurrently, or sometimes may be executed in a reverse order, depending on the functions involved. In the descriptions corresponding to the flowcharts and the block diagrams in the drawings, operations or steps corresponding to different blocks may also occur in different orders than those disclosed, and sometimes there is no specific order between different operations or steps. For example, two continuous operations or steps maybe actually performed substantially concurrently, or sometimes may be performed in the reverse order, depending on the functions involved. Each block in the block diagrams and/or flowcharts, and combinations of the blocks in the block diagrams and/or flowcharts, can be implemented by special hardware-based systems that perform specified functions or actions, or implemented by combinations of special hardware and computer instructions.

## Claims

1. A multi-viewpoint 3D display screen, comprising:
a display panel, having a plurality of composite pixels, wherein each composite pixel in the plurality of composite pixels comprises a plurality of composite subpixel, and each composite subpixel in the plurality of composite subpixel comprises a plurality of subpixels arranged in array; and
a plurality of spherical gratings, covering the plurality of composite subpixels.

2. The multi-viewpoint 3D display screen according to claim 1, wherein the each composite subpixel is in a shape of square.

3. The multi-viewpoint 3D display screen according to claim 2, wherein each subpixel in the plurality of subpixels is in a shape of square.

4. The multi-viewpoint 3D display screen according to claim 2, wherein the plurality of subpixels are arranged in an i×j array, wherein j ≥ 2, and i ≥2.

5. The multi-viewpoint 3D display screen according to claim 4, wherein an aspect ratio of each subpixel in the plurality of subpixels is i/j.

6. The multi-viewpoint 3D display screen according to claim 4, wherein i ≥3, and j ≥3.

7. The multi-viewpoint 3D display screen according to claim 1, wherein the plurality of composite subpixel have different colors, and the plurality of composite subpixels having different colors are alternately arranged.

8. The multi-viewpoint 3D display screen according to claim 7, wherein the plurality of composite subpixel having different colors are arranged in a triangular shape.

9. The multi-viewpoint 3D display screen according to any one of claims 1-8, wherein at least one spherical grating in the plurality of spherical gratings is a round spherical grating or an elliptical spherical grating.

10. The multi-viewpoint 3D display screen according to claim 9, wherein at least one spherical grating in the plurality of spherical gratings further comprises at least one side surface.

11. A multi-viewpoint 3D display device, comprising:
the multi-viewpoint 3D display screen of any one of claims 1-10; and
a3D processing apparatus, configured to render subpixels in a plurality of composite subpixels in the multi-viewpoint 3D display screen.

12. The multi-viewpoint 3D display device according to claim 11, wherein the each composite subpixel comprises a plurality of subpixels arranged in an i×j array;
wherein the plurality of subpixels in the i×j array correspond to i first direction viewpoints and j second direction viewpoints of the multi-viewpoint 3D display device.

13. The multi-viewpoint 3D display device according to claim 11, further comprising: an eye positioning data acquisition device, configured to acquire eye positioning data.

14. The multi-viewpoint 3D display device according to claim 13, wherein the eye positioning data acquisition device is configured to acquire a transverse position of eyes of a user to determine a first direction viewpoint where eyes of the user locate.

15. The multi-viewpoint 3D display device according to claim 14, wherein the 3D processing apparatus is configured to render subpixels, corresponding to the first direction viewpoint, in the plurality of subpixels in array based on the first direction viewpoint where eyes of the user locate.

16. The multi-viewpoint 3D display device according to claim 14 or 15, wherein the eye positioning data acquisition device is configured to acquire at least one of a depth position and a height position of eyes of the user to determine a second direction viewpoint where eyes of the user locate.

17. The multi-viewpoint 3D display device according to claim 16, wherein the 3D processing apparatus is configured to render subpixels, corresponding to the second direction viewpoint, in the plurality of subpixels in array based on the second direction viewpoint where eyes of the user locate.
